# FASCICULE DE BREVET EUROPEEN

(11) **EP 2 563 949 B1**
(45) Date de publication et mention de la délivrance du brevet: **25.01.2017**
(21) Numéro de dépôt: 11730378.4
(22) Date de dépôt: 14.04.2011
(51) Int. Cl.: F01D 5/00, C25D 5/02, F01D 5/28, B29C 45/00, B29K 75/00

(54) **MASQUE AMOVIBLE POUR UNE PLATE-FORME D'AUBE OU DE SECTEUR DE DISTRIBUTEUR DE TURBOMACHINE**
ABNEHMBARERE ABDECKUNG FÜR EINE PLATTFORM EINER TURBINENSCHAUFEL ODER EINES LEITSCHAUFELTRÄGERS VON EINEM TURBOTRIEBWERK
REMOVABLE MASK FOR A PLATFORM OF THE BLADE OR A GUIDE VANE SECTOR OF A TURBOMACHINE

(30) Priorité: 29.04.2010 FR 1053324
(43) Date de publication de la demande: 06.03.2013
(73) Titulaire: Snecma, 75015 Paris (FR)
(72) Inventeur: ETUVE, Pascal, 77550 Moissy Cramayel Cedex (FR); LAGRANGE, Frédéric, 77550 Moissy Cramayel Cedex (FR); MARQUEREAU, Patrick, 77550 Moissy Cramayel Cedex (FR); SAINZ, Pascal, 77550 Moissy Cramayel Cedex (FR)
(74) Mandataire: Ramey, Daniel
(86) Numéro de dépôt international: PCT/FR2011/050863
(87) Numéro de publication internationale: WO 2011/135226

(56) Documents cités:
- EP-A2- 0 927 773
- EP-A2- 1 403 469
- EP-A2- 1 801 360
- EP-A2- 1 970 257
- WO-A1-99/24647
- US-A- 3 527 679
- US-A- 4 650 625
- US-A1- 2002 172 808
- US-A1- 2009 252 872

## Description

La présente invention concerne un masque amovible pour une plate-forme d'aube ou de secteur de distributeur de turbomachine, cette aube ou ce secteur étant destiné à être revêtu d'un dépôt électrolytique.

Lors de leur fabrication, les aubes ou les éléments formant un distributeur haute-pression d'une turbomachine telle qu'un turboréacteur ou un turbopropulseur d'avion sont revêtus par dépôt électrolytique d'une sous-couche d'accrochage d'une couche externe de céramique. La couche de céramique doit être déposée sur les surfaces externes des aubes ou du distributeur qui sont situées dans la veine d'écoulement des gaz de la turbomachine, c'est-à-dire, dans le cas des aubes, sur l'intrados et l'extrados des pales et sur la surface radialement externe des plates-formes, et, dans le cas d'un distributeur, sur l'intrados et l'extrados des pales, sur la surface radialement interne des plates-formes externes et sur la surface radialement externe des plates-formes internes. Les autres surfaces externes des aubes ou du distributeur, c'est-à-dire les surfaces de leurs plates-formes situées en dehors de la veine d'écoulement des gaz, ne sont pas recouvertes de céramique et il n'est donc pas nécessaire de déposer la sous-couche d'accrochage précitée sur ces surfaces.

La surface de chaque plate-forme, qui est destinée à être recouverte de céramique, est raccordée par une arête de liaison (en forme sensiblement de parallélogramme) a une surface périphérique qui s'étend sensiblement perpendiculairement à la surface précitée de la plate-forme et qui ne doit pas être recouverte de céramique.

L'aube ou le distributeur est en général réalisé d'une seule pièce de fonderie. Les surfaces de l'aube ou du distributeur destinées à être recouvertes de céramique ne sont pas rectifiées par usinage. La surface périphérique précitée de chaque plate-forme est rectifiée par usinage pour avoir des côtes précises.

La sous-couche d'accrochage de la couche de céramique est en général à base de platine, qui est un métal très coûteux. Il est donc important d'empêcher le dépôt de ce produit sur les surfaces des plates-formes situées en dehors de la veine d'écoulement des gaz, afin de limiter le coût de fabrication des aubes ou du distributeur.

Dans la technique actuelle, deux technologies sont utilisées pour masquer les surfaces précitées des plates-formes des aubes ou des distributeurs, lors d'une opération de dépôt électrolytique.

La première technologie consiste à couler de la cire directement sur les plates-formes afin de masquer leurs surfaces externes qui ne doivent pas être recouvertes de platine.

La seconde technologie consiste à coller des rubans adhésifs sur les surfaces à masquer.

Le document WO 99/24647 A1 divulgue l'utilisation d'un masque amovible, en caoutchouc ou bien en matière plastique, pour le placage électrolytique des pointes d'aubes, ledit masque venant protéger la partie "basse" de l'aube. Le document EP 1 403 469 A2 divulgue l'utilisation d'un masque amovible pour les étapes de placage électrolytique d'aubes, ledit masque venant protéger la partie de l'aube qui ne doit pas être plaquée sans davantage de spécificité. Le masquage peut se faire avec un ruban, par application d'une cire, ou bien par l'utilisation d'une botte en caoutchouc, sans préciser si ladite botte est réutilisable ou non. Le document US 2002/172808 A1 divulgue l'utilisation d'un masque pour le placage électrolytique d'aubes, ledit masque venant protéger la partie de l'aube qui ne doit pas être plaquée. Ce masque peut être de la cire, de la laque, ou bien une pièce amovible en plastique. Les documents US 3 527 679 A, US 4 650 625 A et EP 1 970 257 A2 divulguent des masques amovibles élastiques, réutilisables pour tout objet devant subir un placage électrolytique partiel, de manière générale.

Cependant, ces technologies ne sont pas satisfaisantes car elles sont longues et coûteuses à mettre en oeuvre et des cas d'infiltration de platine ont été constatés entre les plates-formes et les rubans adhésifs ou entre les plates-formes et la cire, notamment car les rubans adhésifs et la cire se déforment lors du dépôt électrolytique. Ces technologies sont en outre sources de problèmes d'hygiène et de sécurité du fait notamment de l'utilisation de produits toxiques de nettoyage et d'une lame pour la découpe des rubans adhésifs.

De plus, ces technologies ne permettent pas de recouvrir avec précision les surfaces à masquer, et en particulier la surface périphérique précitée de chaque plate-forme, car les moyens de masquage utilisés peuvent déborder sur la surface externe d'une plate-forme destinée à être recouverte d'un dépôt électrolytique et masquer une partie de cette surface, ou au contraire peuvent être en retrait de cette surface et laisser libres des portions de surface périphérique qui seront alors recouvertes par le dépôt électrolytique.

Enfin, ces technologies ne permettent pas de garantir l'uniformité du dépôt électrolytique sur la surface externe de la plate-forme d'une aube ou d'un distributeur, en particulier sur sa périphérie. Il est en effet très difficile de positionner la cire ou le ruban adhésif sur la surface périphérique de la plate-forme de sorte que le bord supérieur de la cire ou du ruban affleure et soit aligné avec la surface externe de la plate-forme exposée aux gaz chauds en fonctionnement. Le bord supérieur de la cire ou du ruban est en général situé un peu au-dessus ou au-dessous de la surface externe de la pièce, ce qui peut entraîner un excès ou des infiltrations de dépôt électrolytique le long des bords latéraux de la plate-forme.

La quantité de platine déposée sur un distributeur par voie électrolytique est en général de l'ordre de 4g avec une tolérance de +/-0,15g. Les infiltrations précitées entraînent une augmentation de dépôt électrolytique de platine supérieure à 0,15g, ce qui représente une perte financière importante.

L'invention a notamment pour but d'apporter une solution simple, efficace et économique aux problèmes des technologies actuelles.

Elle propose à cet effet un masque réutilisable et amovible pour plate-forme d'aube ou de secteur de distributeur de turbomachine, cette aube ou ce secteur étant destiné à être revêtu d'un dépôt électrolytique et comportant au moins une pale et au moins une plate-forme et, respectivement, un pied d'aube et une bride d'accrochage de la plate-forme, ladite plate-forme comportant une surface externe raccordée par une arête à une surface périphérique de la plate-forme qui est sensiblement perpendiculaire la surface externe, le masque comportant des moyens d'emboîtement sur la plate-forme et un rebord périphérique de recouvrement de la surface périphérique de la plate-forme, ce rebord de recouvrement comportant au moins une surface latérale d'appui étanche sur la surface périphérique de la plate-forme et une surface externe libre affleurant la surface externe de la plate-forme le long de l'arête précitée et un évidement dans lequel est engagée avec ajustement serré la plate-forme, caractérisé en ce que le masque est élastiquement déformable, est réalisé en matière plastique, par exemple en polyuréthane, et l'évidement est de forme complémentaire du pied d'aube, respectivement de la bride d'accrochage de la plate-forme.

Le masque selon l'invention est souple ou semi-rigide et est réalisé avant son utilisation sur la pièce à revêtir, ce qui permet de réduire le temps secteur de distributeur, et est rapidement démontable de cette aube ou de ce secteur. Le masquage d'un secteur de distributeur dure beaucoup moins longtemps que le masquage d'un secteur de distributeur avec les technologies de la technique antérieure.

Par ailleurs, le masque selon l'invention est réutilisable pour masquer successivement plusieurs aubes ou secteurs de distributeur identiques. Ceci permet de réduire de manière notable le coût lié au masquage des plates-formes des aubes ou des secteurs de distributeur d'une turbomachine, destinés à subir un dépôt électrolytique.

Le masque selon l'invention épouse sans jeu la partie à masquer de la plate-forme de l'aube ou du secteur de distributeur et évite toute infiltration de matière entre le masque et la plate-forme lors du dépôt électrolytique. Les bords des surfaces à revêtir de la plate-forme sont définis avec précision par le masque selon l'invention, ce qui permet d'obtenir un arrêt franc du dépôt électrolytique au niveau de ces bords. Ceci permet de limiter les pertes de produit électrolytique et de réduire les tolérances de dépôt de ce produit.

De plus, selon une caractéristique de l'invention, le rebord périphérique du masque qui recouvre la surface périphérique de la plate-forme, empêche les infiltrations et se termine exactement au niveau de la surface externe de la plate-forme, dans le prolongement de celle-ci. Cela permet de remédier au problème précité et d'assurer un dépôt électrolytique uniforme sur la surface externe de la plate-forme, en particulier à sa périphérie.

La surface périphérique de la plate-forme, qui est rectifiée par usinage, a des côtes précises et un bon état de surface, ce qui facilite le positionnement et l'appui étanche du rebord précité du masque sur cette surface.

Lors du dépôt électrolytique, le masque peut se rétracter sur la plate-forme, ce qui empêche toute infiltration entre le masque et la plate-forme.

Le masque selon l'invention est réalisé en matière plastique, et par exemple en polyuréthane. Il est de préférence élastiquement déformable et formé d'une seule pièce.

Le masque peut comprendre un évidement dans lequel est destinée à être engagée avec ajustement serré la plate-forme pour empêcher l'infiltration de produit électrolytique entre le masque et la plate-forme.

Les bords latéraux de cet évidement sont en appui sur les bords latéraux de la plate-forme.

L'évidement peut avoir une forme générale parallélépipédique.

L'évidement peut comporter au moins une cavité interne de logement d'un pied de l'aube ou d'une bride d'accrochage du secteur de distributeur.

Le masque selon l'invention peut comprendre ou former des moyens de préhension pour la tenue de l'aube ou du secteur de distributeur lors du dépôt électrolytique.

La surface externe libre du rebord périphérique du masque peut être non plane.

Les surfaces externe et périphérique de la plate-forme étant raccordées entre elles par une première arête de liaison, les surfaces latérale et externe du rebord de recouvrement sont raccordées entre elles par une seconde arête de liaison, et les première et seconde arêtes de liaison sont avantageusement en appui l'une contre l'autre ou au voisinage immédiat l'une de l'autre, ce qui limite ou empêche les infiltrations précitées. Les arêtes de liaison peuvent être sensiblement en forme de parallélogramme.

Avantageusement, le masque selon l'invention comprend plusieurs ergots qui peuvent être retirés, par exemple par découpe, indépendamment les uns des autres et dont le nombre est égal au nombre d'utilisations conseillées du masque.

Dans le cas où le masque peut être utilisé 30 fois sans que son matériau se détériore, le masque comprend 30 ergots indépendants. A chaque utilisation du masque, par exemple lors de la trempe du masque et de la pièce dans un bain électrolytique, un opérateur découpe un ergot, par exemple au moyen d'une lame tranchante. L'opérateur peut donc aisément déterminer le nombre d'utilisations restantes conseillées d'un masque en fonction du nombre d'ergots restants sur ce masque. Un masque qui comportait à l'origine 30 ergots et qui n'en comprend plus que 10, peut être utilisé encore 10 fois. Ces ergots forment donc des moyens de renseignement du nombre conseillé d'utilisations restantes du masque et donc du degré d'usure de ce masque. Lorsqu'un masque n'a plus d'ergot, il peut être mis au rebut. Ceci permet de garantir un bon état matière du masque et de s'assurer d'une bonne étanchéité entre ce masque et la pièce à protéger. Le masque peut comprendre entre 5 et 50 ergots, de préférence entre 10 et 40 ergots et par exemple entre 20 et 30 ergots du type précité.

La présente invention concerne également une aube de turbomachine, comportant une pale reliée à une plate-forme, caractérisée en ce qu'un masque tel que décrit ci-dessus est emboîté sur cette plate-forme.

L'invention concerne encore un secteur de distributeur de turbomachine, comportant deux plates-formes, respectivement interne et externe, entre lesquelles s'étendent une ou plusieurs pales, caractérisé en ce qu'un masque du type précité est emboîté sur chaque plate-forme.

L'invention concerne enfin un procédé de fabrication d'un masque du type précité, caractérisé en ce qu'il comprend une étape consistant à réaliser le masque par injection-moulage, entre un moule et un contre-moule qui reproduit les formes et dimensions de la plate-forme.

Le moule et le contre-moule peuvent être réalisés en un matériau tel que le Bakélite®, un acier, l'aluminium, etc., par exemple.

La présente invention sera mieux comprise et d'autres détails, caractéristiques et avantages de celle-ci apparaîtront plus clairement à la lecture de la description qui suit, faite à titre d'exemple non limitatif et en référence aux dessins annexés, dans lesquels :
- la figure 1 est une vue schématique de côté d'une aube de turbomachine sur la plate-forme de laquelle est très schématiquement représentée la position d'un masque selon l'invention,
- la figure 2 est une vue schématique en perspective d'une aube de turbomachine, équipée d'un masque selon l'invention,
- la figure 3 est une vue schématique en perspective d'un secteur de distributeur de turbomachine sur les plates-formes duquel sont très schématiquement représentées les positions de masques selon l'invention,
- la figure 4 est une vue schématique en perspective d'un secteur de distributeur de turbomachine équipé de masques selon l'invention,
- la figure 5 est une vue schématique en coupe d'un masque selon l'invention emboîté sur le pied et la plate-forme d'une aube de turbomachine, et
- la figure 6 est une vue schématique en coupe selon un plan P du masque de la figure 2.

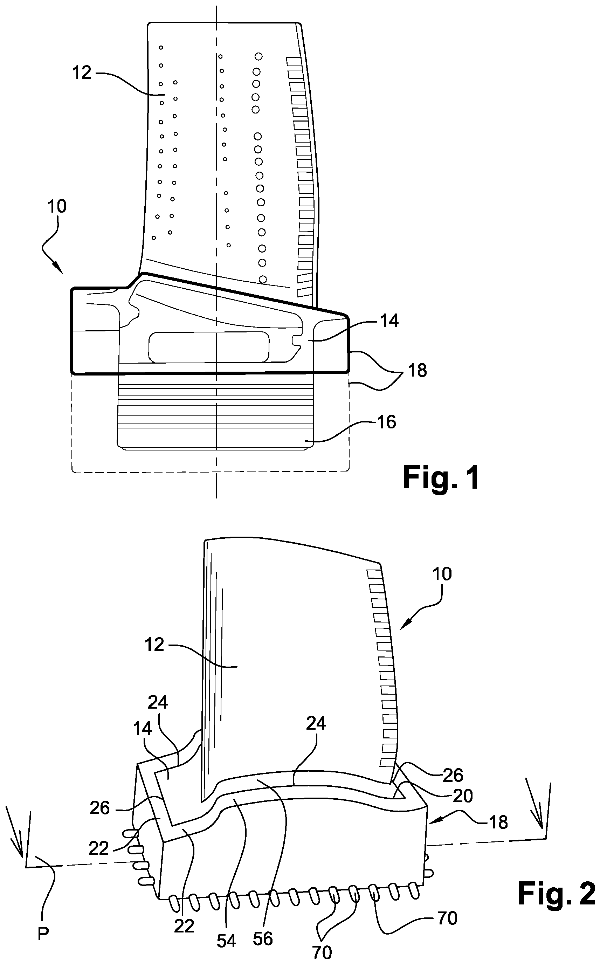

On se réfère d'abord à la figure 1 qui représente une aube 10 de turbomachine, telle qu'un turboréacteur ou un turbopropulseur d'avion, cette aube comportant une pale 12 reliée à son extrémité radialement interne par une plate-forme 14 à un pied 16. Cette aube 10 est destinée à être montée sur un disque de rotor de la turbomachine, par emmanchement de son pied 16 dans une rainure de forme complémentaire de la périphérie du disque.

Les surfaces externes de la pale 12 et de la plate-forme 14 de l'aube, qui sont situées dans la veine d'écoulement des gaz en fonctionnement de la turbomachine, sont destinées à être recouvertes d'une couche de céramique. Une sous-couche à base de platine est déposée par voie électrolytique sur ces surfaces pour assurer l'accrochage de cette couche de céramique.

Pour économiser le produit coûteux de cette sous-couche, les surfaces externes de la plate-forme 14, voire également du pied 16, qui ne sont pas exposées aux gaz chauds en fonctionnement et qui ne sont donc pas destinés à être recouvertes de céramique, sont protégées par un masque 18 selon l'invention, qui empêche les infiltrations du produit entre le masque et les parties de l'aube à masquer.

Le masque 18, mieux visible en figure 2, comprend des moyens d'emboîtement sur la plate-forme 14 de l'aube 10 ainsi que des moyens de recouvrement des surfaces précitées de la plate-forme et du pied 16, sur lesquelles un dépôt électrolytique n'est pas nécessaire.

Le masque 18 est ici formé d'une pièce monobloc de forme parallélépipédique, qui comporte un évidement 20 dans lequel est engagée avec ajustement serré la plate-forme 14 de l'aube. Les bords latéraux 22 de cet évidement prennent appui sur les bords latéraux 24, 26 de la plate-forme, pour empêcher les infiltrations du produit de recouvrement, comme expliqué dans ce qui précède.

Le masque 18 est réalisé dans un matériau plastique élastiquement déformable, tel qu'un polyuréthane, de façon à faciliter son montage et son démontage.

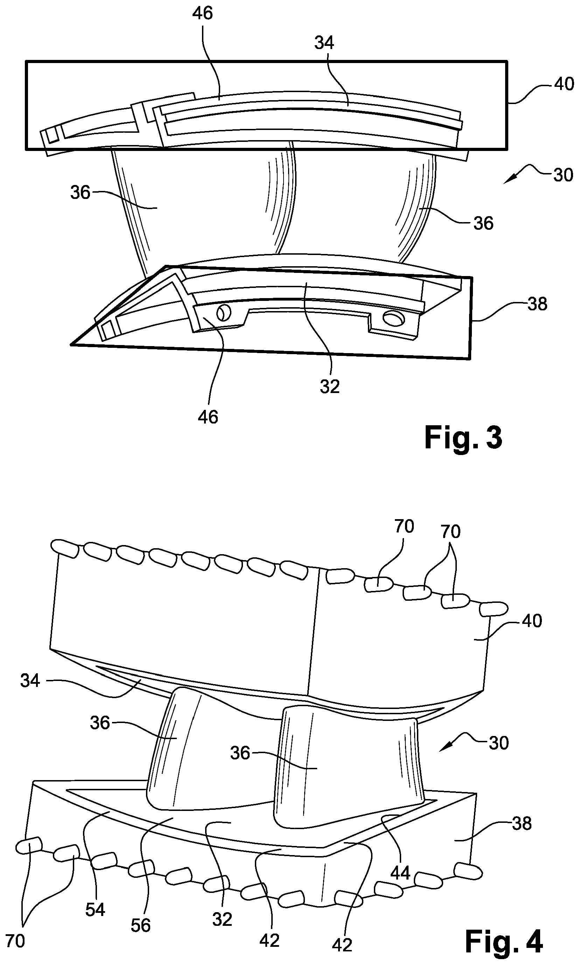

La figure 3 représente un secteur de distributeur 30 de turbomachine, comportant deux plates-formes 32, 34, respectivement interne et externe, entre lesquelles s'étendent des pales 36, au nombre de deux dans l'exemple représenté.

Chaque plate-forme 32, 34 du secteur de distributeur est destinée à être protégée par un masque 38, 40 selon l'invention, pour empêcher les infiltrations de produit de recouvrement entre le masque et la plate-forme correspondante et le dépôt de ce produit sur les surfaces de la plate-forme qui ne sont pas exposées aux gaz chauds en fonctionnement.

Comme cela est mieux visible en figure 4, les masques 38, 40 sont similaires au masque 18 décrit précédemment, et comprennent chacun un évidement 44 dans lequel est emboîtée une plate-forme 32, 34. Les bords latéraux 42 de cet évidement sont en appui sur les bords latéraux de la plate-forme correspondante. L'évidement de chaque masque 38, 40 comporte au moins une cavité de logement d'une bride d'accrochage 46 de la plate-forme 32, 34 correspondante du distributeur.

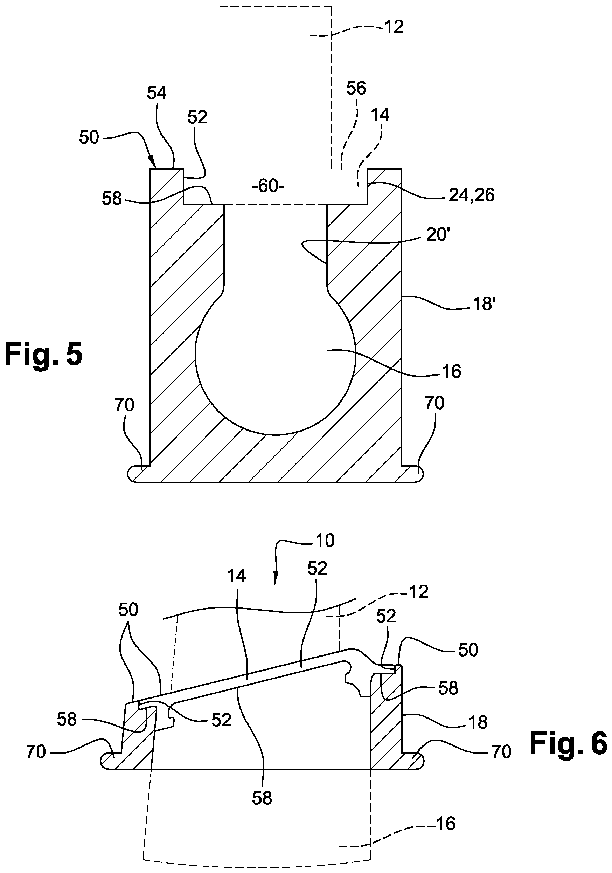

La figure 5 est une vue schématique en coupe transversale d'un masque 18' similaire à celui de la figure 2, ce masque 18' étant emboîté sur la plate-forme 14 et l'intégralité du pied 16 d'une aube, qui est ici en queue d'aronde.

Le masque 18' comporte un évidement 20' de forme complémentaire du pied d'aube 16.

Le masque 18' comporte un rebord périphérique externe 50 qui est destiné à s'étendre le long des bords latéraux 24, 26 de la plate-forme 14, et qui comprend une face latérale 52 d'appui sur ces bords latéraux. Ces bords latéraux 24, 26 définissent une surface périphérique qui s'étend sensiblement perpendiculairement à la surface externe 56 de la plate-forme c'est-à-dire la surface de la plate-forme qui est exposée à des gaz en fonctionnement de la turbomachine. Cette surface externe 56 doit être recouverte d'un dépôt électrolytique alors que la surface périphérique définie par les bords 24, 26 doit être masquée.

La surface externe libre 54 du rebord périphérique 50 du masque est alignée avec et s'étend dans le prolongement de la surface externe 56 de la plate-forme. Autrement dit, la surface externe libre 54 du rebord périphérique 50 affleure la surface externe 56 de la plate-forme. Dans les figures 2 et 4, cette surface externe libre 54 est non plane.

La face latérale 52 du rebord périphérique 50 du masque est reliée à son extrémité interne à une face interne 58 d'appui de la plate-forme 14, qui est destinée à s'étendre le long des bords latéraux 24, 26 de la plate-forme sensiblement parallèlement à la surface externe 54 précitée du rebord. Les faces internes 52 et 58 du masque définissent entre elles une cavité interne 60 dans laquelle est montée serrée la plate-forme 14 de l'aube.

La figure 6 est une vue en coupe du masque 18 de la figure 2, selon le plan P. La surface externe libre du rebord périphérique 50 du masque est non plane et est destinée à affleurer la surface externe 56 de la plate-forme 14 de l'aube, comme cela est visible en figure 2.

Comme cela est représenté en figure 5, le rebord périphérique du masque 18 de la figure 6 comporte une face latérale d'appui 52 qui est reliée à une face interne d'appui 58, ces faces 52, 58 définissant entre elles une cavité dans laquelle est montée serrée la plate-forme de l'aube.

Les masques décrits ci-dessus comportent avantageusement des ergots 70 formés d'une seule pièce avec les moyens d'emboîtement et de recouvrement précités (figures 4, 5 et 6).

Dans les exemples représentés, ces ergots 70 sont situés sur la surface périphérique externe de chaque masque, au voisinage de son extrémité opposée à l'évidement du masque. Les ergots 70 s'étendent sur tout le pourtour du masque et sont régulièrement espacés. Ils ont une longueur de quelques millimètres et peuvent être coupés par une lame ou autre au niveau de leurs bases, c'est-à-dire au niveau de leurs extrémités de liaison au masque. Le nombre d'ergots correspond au nombre d'utilisations conseillés du masque, comme cela est expliqué dans ce qui précède.

## Revendications

1. Ensemble comprenant :
- un masque (18) réutilisable et amovible,
- une plate-forme (14) de l'un parmi une aube (10) et un secteur de distributeur (30) de turbomachine, cette aube ou ce secteur étant destiné à être revêtu d'un dépôt électrolytique et comportant :
-- au moins une pale (12) et au moins une plate-forme (14;32,34),
-- et, respectivement, un pied (16) d'aube et une bride d'accrochage (46) de la plate-forme du secteur de distributeur (30),
ladite plate-forme comportant une surface externe (56) raccordée par une arête à une surface périphérique de la plate-forme qui est sensiblement perpendiculaire à la surface externe, le masque comportant :
- des moyens d'emboîtement pour ajuster le masque sur la plate-forme, avec un rebord périphérique (50) qui recouvre la surface périphérique de la plate-forme, ledit rebord de recouvrement comportant au moins une surface latérale (52) d'appui étanche sur la surface périphérique de la plate-forme et une surface externe (54) libre affleurant la surface externe de la plate-forme de long de l'arête précitée,
- et un évidement (20,20') dans lequel est engagée avec ajustement serré la plate-forme (14),
**caractérisé en ce que** le masque est élastiquement déformable, est réalisé en matière plastique, par exemple en polyuréthane, et l'évidement (20') est de forme complémentaire du pied d'aube (16), respectivement de la bride d'accrochage (46) de la plate-forme.

2. Ensemble selon la revendication 1, **caractérisé en ce que** le masque est formé d'une seule pièce.

3. Ensemble selon l'une des revendications précédentes, **caractérisé en ce que** l'évidement (20) a une forme générale parallélépipédique.

4. Ensemble selon l'une des revendications précédentes, **caractérisé en ce que** l'évidement (20') comporte au moins une cavité interne de logement du pied (16) de l'aube, respectivement de la bride d'accrochage du secteur de distributeur.

5. Ensemble selon l'une des revendications précédentes, **caractérisé en ce que** la surface externe libre (54) du rebord périphérique (50) est non plane.

6. Ensemble selon l'une des revendications précédentes, **caractérisé en ce que** les surfaces latérale (52) et externe (54) du rebord de recouvrement sont raccordées entre elles par une arête de liaison, qui est en appui sur l'arête de la plate-forme ou au voisinage immédiat de cette dernière, dans le prolongement de la surface externe de la plate-forme.

7. Ensemble selon la revendication 6, **caractérisé en ce que** les arêtes de la plate-forme et du masque sont sensiblement en forme de parallélogramme.

8. Ensemble selon l'une des revendications précédentes, **caractérisé en ce que** le masque comprend des moyens de préhension pour la tenue de l'aube ou du secteur de distributeur lors du dépôt électrolytique.

9. Ensemble selon l'une des revendications précédentes, **caractérisé en ce que** le masque comprend plusieurs ergots (70) qui peuvent être retirés, par exemple par découpe, indépendamment les uns des autres et dont le nombre est égal au nombre d'utilisations conseillés du masque (18).

10. Procédé de fabrication d'un masque appartenant à l'ensemble selon l'une des revendications 1 à 9, **caractérisé en ce qu'**à partir de la plate-forme de l'aube ou du secteur de distributeur, le procédé comprend une étape consistant à réaliser le masque par injection-moulage, entre un moule et un contre-moule qui reproduit les formes et dimensions de ladite plate-forme de l'aube ou du secteur de distributeur.

## Patentansprüche

1. Einheit, die Folgendes umfasst:
- eine wiederverwendbare, abnehmbare Maske (18),
- eine Plattform (14) einer der Schaufeln (10) und einen Verteilersektor (30) eines Turbinentriebwerks, wobei diese Schaufel oder dieser Sektor dazu bestimmt sind, mit einer elektrolytischen Abscheidung beschichtet zu werden, die Folgendes umfasst:
- mindestens ein Schaufelblatt (12) und mindestens eine Plattform (14; 32, 34),
- und jeweils einen Schaufelfuß (16) und einen Befestigungsflansch (46) für die Plattform des Verteilersektor (30),
wobei besagte Plattform eine Außenfläche (56) aufweist, die über eine Kante mit der Umfangsfläche der Plattform verbunden ist, wobei diese im Wesentlichen senkrecht zur Außenfläche steht, und die Maske Folgendes enthält:
- Eingriffsmittel, damit die Maske richtig auf der Plattform sitzt, wobei ein umlaufender Kragen (50) die Randfläche der Plattform bedeckt, und besagte Abdeckkante mindestens eine seitliche Auflagefläche (52) umfasst, die dicht an der Umfangsfläche der Plattform anliegt, und eine freie Außenfläche (54), die mit der Außenfläche der Plattform entlang der vorgenannten Kante bündig ist,
- und eine Aussparung (20, 20'), in welche die Plattform (14) genau eingepasst wird,
**dadurch gekennzeichnet, dass** die Maske elastisch verformbar ist, aus Kunststoff, wie zum Beispiel Polyurethan, gefertigt ist, und die Aussparung (20') eine zum Schaufelfuß (16) bzw. zum Befestigungsflansch (46) der Plattform komplementäre Form aufweist.

2. Einheit nach Anspruch 1, **dadurch gekennzeichnet, dass** die Maske aus einem einzigen Stück geformt ist.

3. Einheit nach einem der vorhergehenden Ansprüche, **dadurch gekennzeichnet, dass** die Aussparung (20) generell quaderförmig ist.

4. Einheit nach einem der vorhergehenden Ansprüche, **dadurch gekennzeichnet, dass** die Aussparung (25') mindestens einen Innenhohlraum für die Aufnahme des Schaufelfußes (16) bzw. des Befestigungsflansches des Verteilersektors umfasst.

5. Einheit nach einem der vorhergehenden Ansprüche, **dadurch gekennzeichnet, dass** die freie Außenfläche (54) des umlaufenden Kragens (50) nicht eben ist.

6. Einheit nach einem der vorhergehenden Ansprüche, **dadurch gekennzeichnet, dass** die Seitenfläche (52) und die Außenfläche (54) der Abdeckkante untereinander durch eine Verbindungskante, die auf der Kante der Plattform aufliegt oder sich unmittelbar daneben in der Verlängerung der Außenfläche der Plattform befindet, verbunden sind.

7. Einheit nach Anspruch 6, **dadurch gekennzeichnet, dass** die Kanten der Plattform und der Maske im Wesentlichen quaderförmig sind.

8. Einheit nach einem der vorhergehenden Ansprüche, **dadurch gekennzeichnet, dass** die Maske Greifmittel zum Halten der Schaufel oder des Verteilersektors bei der elektrolytischen Abscheidung aufweist.

9. Einheit nach einem der vorhergehenden Ansprüche, **dadurch gekennzeichnet, dass** die Maske mehrere, voneinander unabhängige Zapfen (70) aufweist, die beispielsweise durch Schneiden entfernt werden können, und deren Anzahl mit der Anzahl der empfohlenen Benutzungen der Maske (18) übereinstimmt.

10. Verfahren zur Herstellung einer Maske, die zu einer Einheit nach einem der Ansprüche 1 bis 9 gehört, **dadurch gekennzeichnet, dass** ausgehend von der Plattform der Schaufel oder des Verteilersektors das Verfahren einen Schritt enthält, der in der Herstellung der Maske durch Spritzgießen in eine Form und eine Gegenform besteht, die die Formen und Abmessungen besagter Plattform der Schaufel oder des Verteilersektors aufweisen.

## Claims

1. An assembly comprising:
- a reusable and removable mask, and
- a platform (14) of one a blade (10) and a nozzle sector (30) of a turbine engine, the blade or the nozzle sector each being adapted to be coated in an electrolytic deposit and comprising :
-- at least one airfoil (12) and at least one platform (14;32,34) and,
-- respectively, a blade root (16) and an attachment flange (46) of the platform of the nozzle sector (30),
said platform having an outer surface (56) connected via an edge to a peripheral surface of the platform and which is substantially perpendicular, the mask comprising:
- engagement means for adjusting the mask on the platform, through a peripheral rim (50) covering the peripheral surface of the platform, said covering rim including a side surface (52) for a tight support on the peripheral surface of the platform and a free end surface (54) flush with the outer surface (56) of the platform along said edge,
- and a recess (20,20') within the platform (14) is engaged as a tight fit,
**characterized in that** the mask is elastically deformable, is made of plastics material, such as in polyurethane, and the recess (20') has a shape complementary to a shape of the blade root (16), respectively of the attachment flange (46) of nozzle sector platform.

2. The assembly according to claim 1, **characterized in that** the mask is made as a single piece.

3. The assembly according to any of the preceding claim, **characterized in that** the recess (20) is substantially parallelogram-shaped.

4. The assembly according to any of the preceding claim, **characterized in that** the recess (20') includes at least one cavity for housing a root (16) of the blade, respectively of the attachment flange (46) of the nozzle sector platform.

5. The assembly according to any of the preceding claim, **characterized in that characterized in that** the free end surface (54) of the peripheral rim (50) is not plane.

6. The assembly according to any of the preceding claim, **characterized in that** the side surface (52) and end surface (54) of the covering rim (50) are connected together via a connecting edge, which edge bears against the edge of the platform or against the immediate vicinity thereof, extending the outer surface of the platform.

7. The assembly according to claim 6, **characterized in that** the edges of the platform and of the mask are substantially parallelogram-shaped.

8. The assembly according to any preceding claim, **characterized in that** the mask includes grip means for holding the blade or the nozzle sector during electrolytic deposition.

9. The assembly according to any preceding claim, **characterized in that** the mask includes a plurality of tabs (70) that can be removed, e.g. by being cut off, independently of one another, the number of tabs being equal to the recommended number of times the mask (18) should be used.

10. A method of fabricating a mask belonging to the assembly according to any one of claims 1 to 9, **characterized in that**, from the platform of the blade or the nozzle sector, the method comprises a step consisting in making the mask by injection molding between a mold and a counter-mold reproducing the shapes and the dimensions of the platform of the blade or of the nozzle sector.
